(19) Europäisches Patentamt
European Patent Office
Office européen des brevets

(11) Veröffentlichungsnummer: **0 077 966**
**B1**

(12) # EUROPÄISCHE PATENTSCHRIFT

(45) Veröffentlichungstag der Patentschrift: **02.04.86**

(21) Anmeldenummer: **82109392.9**

(22) Anmeldetag: **11.10.82**

(51) Int. Cl.⁴: **C 08 L 63/00**, C 08 K 9/04, C 08 K 9/02, H 01 B 3/40, C 09 C 1/02, C 09 C 3/06, C 09 C 3/08

(54) **Verfahren zur Herstellung von Reaktionsharzsystemen.**

(30) Priorität: **22.10.81 DE 3141946**

(43) Veröffentlichungstag der Anmeldung: **04.05.83 Patentblatt 83/18**

(45) Bekanntmachung des Hinweises auf die Patenterteilung: **02.04.86 Patentblatt 86/14**

(84) Benannte Vertragsstaaten: **AT BE CH DE FR GB IT LI NL SE**

(56) Entgegenhaltungen:
**DE - A - 2 810 035**
**DE - B - 1 189 277**
**GB - A - 2 054 541**

(73) Patentinhaber: **Siemens Aktiengesellschaft, Berlin und München Wittelsbacherplatz 2, D-8000 München 2 (DE)**

(72) Erfinder: **Grimmer, Rudolf, Dr. Dipl.-Chem., Reinschartenweg 17 a, D-8520 Erlangen (DE)**

**EP 0 077 966 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Reaktionsharzsystemen auf der Basis von anhydridgehärteten Epoxidharzen.

Epoxidharzsysteme werden für spezielle Anwendungen mit gemahlenem Calcium-Magnesium-Carbonat oder Calciumcarbonat gefüllt. Die mechanischen Formstoffeigenschaften liegen um 50% niedriger als bei quarzmehlgefüllten Systemen. Dieser Abfall der mechanischen Eigenschaften liegt vor allem daran, dass die Haftung zwischen der Harzmatrix und dem Carbonat-Füllstoff schlecht ist.

Aufgabe der Erfindung ist eine Verbesserung der Haftung zwischen Harzmatrix und gemahlenen carbonathaltigen Füllstoffen, um die mechanischen Eigenschaften der mit Carbonaten gefüllten Reaktionsharzsysteme anzuheben. Gleichzeitig sollte auch eine vorteilhafte Verfahrensweise für die Herstellung von mit carbonathaltigen Füllstoffen gefüllten Reaktionsharzsystemen gefunden werden.

Einfaches Zumischen von Benetzungsmitteln (z.B. DE-A-2 810 035) oder Haftvermittlern, wie Silanen und Titanaten, brachte nicht den gewünschten Erfolg.

Diese Aufgabe wird nun dadurch gelöst, dass erfindungsgemäss die Mischung aus Epoxidharz, carbonathaltigem Füllstoff, Härter und gegebenenfalls üblichen Zusatzstoffen mit 0,1 bis 3,0 Gew.-%, bezogen auf das Gewicht des Füllstoffes eines mit der Oberfläche des Füllstoffes reagierenden und abbindenden mehrbasischen anorganischen oder mehrbasischen organischen Säure oder organischen Hydroxysäure bei 60 bis 150 °C, versetzt wird.

Gemäss weiteren vorteilhaften Ausführungsformen kann das Haftmittel auch zunächst dem Härter oder dem Epoxidharz zugeführt werden.

Durch die erfindungsgemässe Zugabe eines von Säure zu dem mit einem Carbonat, insbesondere einem mit Calcium-Magnesium-Carbonat oder Calciumcarbonat bereits gefüllten Epoxidharz, dem Härter bzw. dem fertigen Reaktionsharzsystem konnten Formstoffe erhalten werden, deren ausgehärtete Produkte selbst hinsichtlich der mechanischen Eigenschaften den mit Quarzmehl gefüllten ähnlich sind.

Der Einsatz von mehrbasischen Säuren brachte Festigkeitssteigerungen bis zu 25%. Noch bessere Ergebnisse konnten mit organischen Hydroxysäuren erreicht werden. Mit Hydroxydi- und Hydroxytricarbonsäuren, sowie mehrbasischen Aminosäuren, konnte eine Anhebung des mechanischen Eigenschaftsniveaus um 30% erreicht werden.

Besonders geeignete Füllstoffe sind gemahlener Dolomit oder gemahlene Calcite.

Geeignete mehrbasische anorganische Säuren sind z.B. Phosphor-, Schwefel- und Borsäure. Als mehrbasische organische Säure haben sich Malein-, Bernstein-, Fumar-, Cyclohexandicarbon- und Adipinsäure erwiesen.

Geeignete organische Hydroxysäuren sind z.B. Hydroxybenzoesäuren 2-Hydroxyäthansulfonsäure, Wein-, Tartron- und Glykolsäure, sowie Mannit und vor allem Apfel- und Zitronensäure.

Geeignete mehrbasische Aminosäuren sind z.B. Asparagin-, Glutamin-, Sulfanil- und Aminobenzoesäuren und Taurin.

Zahlreiche Anhydridhärter für Epoxidharz sind in der Literatur beschrieben, beispielsweise «Epoxydverbindungen und Epoxydharze» Dr. A.M. Paquin, 1958, S. 473 bis 530.

Geeignete Anhydridhärter, die vorzugsweise Verwendung finden, sind Phthalsäureanhydrid, Tetrahydrophthalsäureanhydrid und Hexahydrophthalsäureanhydrid.

Als Epoxidharze sind Polyepoxidverbindungen geeignet, die mehr als eine 1,2-Epoxidgruppe im Molekül enthalten und welche mit den genannten Härtern oder Härtergemischen zu Formkörpern umgesetzt werden können. Solche geeignete Epoxidharze entsprechen der allgemeinen Formel

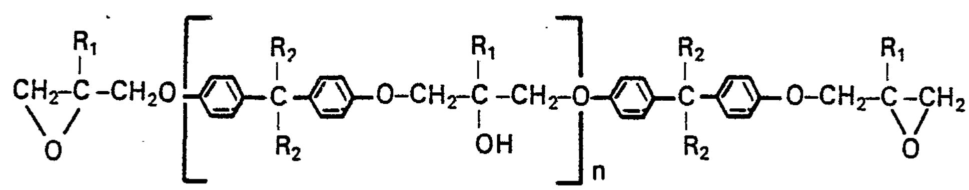

wobei der Rest $R_1$ die Bedeutung H, $R_2$ die Bedeutung $CH_3$ und H hat und n einen Wert von 0 bis 20 besitzt. Sie haben in 100%igem Zustand bei 25 °C eine Viskosität von 10 000 bis 15 000 mPas und ein Epoxidäquivalent (EV) von 170 bis 500. Die Herstellung eines solchen Harzes kann nach bekannten Verfahren aus Bisphenol A und Epichlorhydrin erfolgen.

Ferner sind Epoxidharze geeignet auf Hydantoin-, Novolak-, Diglycidylester- und cycloaliphatischer Basis.

Die erfindungsgemässen Reaktionsharzmassen können als Tauchharze, Giessharze, Einbettungs- und Isolationsmasse, insbesondere für die Elektrotechnik dienen. Sie finden mit besonderem Vorteil Verwendung für die Herstellung von Bauteilen der $SF_6$-Technik.

Die Erfindung wird durch die folgenden Beispiele erläutert.

Beispiel 1

1000 g eines Bisphenol-A-Epoxidharzes (Ep-Zahl: 0,24) werden auf 140 °C erwärmt. Dazu werden 2500 g Dolomitmehl gemischt, das vorher bei 140 °C 2 Stunden bei 1 h Pa getrocknet worden ist.

Dann werden 12,5 g Apfelsäure bei 140 °C untergerührt. Diese Masse wird bei 140 °C 2 Stunden auf 1 h Pa entgast. Anschliessend werden 320 g auf 140 °C aufgeheiztes Phthalsäureanhydrid als Härtungsmittel zugegeben. Diese Masse wird bei 140 °C 5 min auf 1 h Pa entgast und dann in die auf 150 °C vorgeheizten Formen gegossen. Die Härtung erfolgt bei 150 °C im Verlauf von 16 Stunden.

Die z.B. so hergestellten Normstäbe (120 mm × 15 mm × 10 mm) werden nach einwöchiger Lagerung bei Raumtemperatur auf die Formbeständigkeit nach Martens Biegefestigkeit und Schlagzähigkeit geprüft.

| | Formbeständigkeit nach Martens °C | Biegefestigkeit $N/mm^2$ | Schlagzähigkeit $kJ/m^2$ |
|---|---|---|---|
| ohne Zusatz von Apfelsäure | 113 | 78 | 6,9 |
| mit Zusatz von Apfelsäure | 110 | 90 | 9,2 |

Beispiel 2

1000 g eines Bisphenol-A-Epoxidharzes (EP-Zahl: 0,24) werden auf 140 °C erwärmt. Dazu werden 2500 g Dolomitmehl gemischt, das vorher bei 140 °C 2 Stunden bei 1 h Pa getrocknet worden ist. Diese Masse wird 30 min bei 140 °C auf 1 h Pa entgast. Anschliessend werden 320 g Phthalsäureanhydrid, in dem bei 160 °C 12,5 g Fumarsäure gelöst sind, als Härtungsmittel zugegeben. Diese Masse wird bei 140 °C 5 min auf 1 h Pa entgast und dann in die auf 150 °C vorgeheizten Formen gegossen. Die Härtung erfolgt bei 150 °C im Verlauf von 16 Stunden.

Die Messungen an den Normstäben zeigten folgendes Ergebnis:

| | Formbeständigkeit nach Martens °C | Biegefestigkeit $N/mm^2$ | Schlagzähigkeit $kJ/m^2$ |
|---|---|---|---|
| ohne Zusatz von Fumarsäure | 113 | 78 | 6,9 |
| mit Zusatz von Fumarsäure | 115 | 91 | 8,3 |

Beispiel 3

400 g eines Hydantoin-Epoxidharzes werden mit 44 g eines Dicarbonsäureanhydrids bei 80 °C vermischt. Dazu werden unter Rühren 1520 g Dolomitmehl gegeben, das vorher 2 Stunden bei 120 °C getrocknet worden ist. In diese 80 °C warme Masse werden 7,6 g Zitronensäure eingerührt. Die Mischung wird bei 80 °C 10 min auf 2 h Pa entgast und dann in die auf 160 °C vorgewärmten Formen vergossen. Die Härtung erfolgt bei 160 °C im Verlauf von 4 Stunden. Die Prüfung der Normstäbe liefert folgende Werte:

| | Formbeständigkeit nach Martens °C | Biegefestigkeit $N/mm^2$ | Schlagzähigkeit $kJ/m^2$ |
|---|---|---|---|
| ohne Zusatz von Zitronensäure | 126 | 61 | 5,2 |
| mit Zusatz von Zitronensäure | 143 | 81 | 5,7 |

Beispiel 4

1000 g Hexahydrophthalsäurediglycidylester werden bei 180 °C mit 3800 g Calitmehl vermischt. Diese Masse wird bei 80 °C 30 min auf 1 h Pa entgast. Anschliessend werden 900 g Hexahydrophthalsäure, in der 15 g Phosphorsäure gelöst sind, zugegeben. Nach nochmaligem 5minütigem Entgasen werden 10 g eines tertiären Amines als Beschleuniger untergerührt und die Masse in die auf 80 °C vorgewärmten Formen gegossen. Die Härtung erfolgt während 6 Stunden bei 80 °C und zusätzlich 10 Stunden bei 140 °C. Es ergeben sich an den Normstäben folgende Prüfwerte:

| | Formbeständigkeit nach Martens °C | Biegefestigkeit $N/mm^2$ | Schlagzähigkeit $kJ/m^2$ |
|---|---|---|---|
| ohne Zusatz von Phosphorsäure | 108 | 67 | 6,7 |
| mit Zusatz von Phosphorsäure | 103 | 77 | 7,3 |

**Patentansprüche**

Verfahren zur Herstellung von Reaktionsharzsystemen auf der Basis von Epoxidharzen, dadurch gekennzeichnet, dass eine Mischung aus Epoxidharz, carbonathaltigem Füllstoff, Anhydridhärter und gegebenenfalls üblichen Zusatzstoffen mit 0,1 bis 3,0 Gew.-%, bezogen auf das Gewicht des Füllstoffes, einer mit der Oberfläche des Füllstoffes reagierenden und abbindenden mehrbasischen anorganischen oder mehrbasischen organischen Säure oder organischen Hydroxysäure bei 60 bis 150 °C, versetzt wird.

2. Verfahren nach Anspruch 1, dadurch gekennzeichnet, dass zunächst der Anhydridhärter mit dem Haftmittel versetzt wird.

3. Verfahren nach Anspruch 1, dadurch gekennzeichnet, dass zunächst das Epoxidharz mit dem Haftmittel versetzt wird.

4. Verfahren nach Anspruch 1, 2 oder 3, dadurch gekennzeichnet, dass als carbonhaltiger Füllstoff Calcium-Magnesium-Carbonat verwendet wird.

5. Verfahren nach Anspruch 1, 2 oder 3, dadurch gekennzeichnet, dass als carbonhaltiger Füllstoff Calciumcarbonat verwendet wird.

6. Verfahren nach Anspruch 1–5, dadurch gekennzeichnet, dass Apfelsäure oder Zitronensäure verwendet wird.

7. Verfahren nach Anspruch 1–5, dadurch gekennzeichnet, dass als mehrbasische organische Säure Bernsteinsäure oder Fumarsäure verwendet wird.

8. Verfahren nach Anspruch 1 bis 4, dadurch gekennzeichnet, dass als Haftmittel eine Aminosäure verwendet wird.

## Revendications

1. Procédé de préparation de systèmes réactionnels de résines à base de résines époxydiques, caractérisé en ce qu'il consiste à mélanger entre 60 et 150 °C, un mélange de résines époxydiques, de charge contenant du carbonate, du durcisseur à l'anhydride et, le cas échéant, d'additifs habituels, à de 0,1 à 3,0% en poids rapportés au poids de la charge, d'un polyacide minéral ou d'un polyacide organique, ou d'un hydroxyacide organique réagissant avec la surface de la charge et donnant une adhérence.

2. Procédé suivant la revendication 1, caractérisé en ce qu'il consiste à mélanger d'abord le durcisseur à l'anhydride à l'agent donnant de l'adhérence.

3. Procédé suivant la revendication 1, caractérisé en ce qu'il consiste à mélanger d'abord la résine époxydique à l'agent donnant de l'adhérence.

4. Procédé suivant la revendication 1, 2 ou 3, caractérisé en ce qu'il consiste à utiliser comme charge contenant du carbonate, du carbonate de calcium et de magnésium.

5. Procédé suivant la revendication 1, 2 ou 3, caractérisé en ce qu'il consiste à utiliser comme charge contenant du carbonate, du carbonate de calcium.

6. Procédé suivant l'une des revendications 1 à 5, caractérisé en ce qu'il consiste à utiliser de l'acide malique ou de l'acide citrique.

7. Procédé suivant l'une des revendications 1 à 5, caractérisé en ce qu'il consiste à utiliser comme polyacide organique, de l'acide succinique ou de l'acide fumarique.

8. Procédé suivant l'une des revendications 1 à 4, caractérisé en ce qu'il consiste à utiliser comme agent donnant de l'adhérence, un aminoacide.

## Claims

1. Process for the production of setting resin compositions having an epoxy resin basis, characterised in that a mixture of epoxy resin, a carbonate-containing filler, anhydride hardener, and possibly conventional additives as 0.1 to 3.0 percent by weight relative to the weight of the filler, are mixed with a polybasic inorganic or polybasic organic acid, or an organic hydroxy acid, which acid reacts with and bonds to the surface of the filler, at 60 to 150 °C.

2. A process as claimed in Claim 1, characterised in that firstly, the anhydride hardener is mixed, with the bonding agent.

3. A process as claimed in Claim 1, characterised in that firstly, the epoxy resin is mixed with the bonding agent.

4. A process as claimed in Claim 1, 2 or 3, characterised in that calcium-magnesium carbonate is used as carbon-containing filler.

5. A process as claimed in Claim 1, 2 or 3, characterised in that calcium carbonate is used as carbon-containing filler.

6. A process as claimed in Claim 1–5, characterised in that malic acid or citric acis is used.

7. A process as claimed in Claim 1–5, characterised in that succinic acid or fumaric acid is used as polybasic organic acid.

8. A process as claimed in Claim 1 to 4, characterised in that an amino-acid is used as bonding agent.